# EUROPEAN PATENT APPLICATION

(11) **EP 1 061 744 A2**
(43) Date of publication of application: **20.12.2000**
(21) Application number: 00303512.8
(22) Date of filing: 26.04.2000
(51) Int. Cl.: H04N 7/167, H04N 7/24

(54) **Controlling access to a data stream**

(30) Priority: 26.04.1999 US 130986; 25.04.2000 US 559819
(71) Applicant: Sarnoff Corporation, Princeton, NJ 08543-6449 (US)
(72) Inventor: Ihrie, David Wayne, Princeton Junction, NJ 08550 (US)
(74) Representative: Pratt, Richard Wilson

(57) **Abstract**

A method and apparatus for protecting the broadcast of a digital image sequence from unauthorized access. Specifically, a trusted device is employed by an encoding system for inserting impairments directly into the encoded broadcast stream. Along with the impairments, the instructions for removing the impairments are also inserted into the encoded broadcast stream. In one embodiment, the instructions for removing the impairments are stored in a packet that is uniquely identified.

## Description

This application claims the benefit of U.S. Provisional Application No. 60/130,986 filed on April 26, 1999, which is herein incorporated by reference.

The invention relates to a method and apparatus for protecting the broadcast of an image sequence from unauthorized access. Specifically, the present invention describes a method for protecting a "broadcast stream", e.g., an MPEG stream, in a manner that allows trusted devices on a receiving client to properly control the decoding of the stream either after it is received and stored, or during the streaming transmission.

### BACKGROUND OF THE DISCLOSURE

With the ever-increasing proliferation of digital information, the concept of broadcasting digital information has gained wide acceptance. This transformation has presented both opportunities and challenges in broadcasting information in digital format.

One issue is the ability to limit access of the broadcast information to subscribers or clients. For example, a digital studio or station may broadcast digital information that is accessible to a large group of receivers. However, the digital studio or station may only wish for its paying subscribers to be able to access and decode the transmitted digital information.

Some multimedia systems may incorporate "conditional access" mechanisms, that permit a permissioning authority to grant or deny access of a receiving device to encrypted data streams, based on prior arrangements between the receiving party and the permissioning authority. Typically, these "conditional access" mechanisms are implemented via transmitted permissioning objects or keys. Thus, the security of the data stream is solely based on the encryption key that the receiving party employs to decode the data streams. However, if the encryption key is comprised or stolen, a non-authorized receiving party may then exploit the broadcast streams without having to pay the digital studio or station. Additionally, such conditional access mechanisms are incapable of measuring or quantifying the amount of information that has been accessed by the receiving party.

Therefore, there is a need in the art for an apparatus and method for protecting the broadcast of a digital image sequence from unauthorized access.

### SUMMARY OF THE INVENTION

An embodiment of the present invention is a method and apparatus for protecting the broadcast of a digital image sequence from unauthorized access. Specifically, a trusted device is employed by an encoding system for inserting impairments directly into the encoded broadcast stream. Along with the impairments, the instructions for removing the impairments are also inserted into the encoded broadcast stream. In one embodiment, the instructions for removing the impairments are stored in a packet that is uniquely identified.

In turn, a trusted device is employed by a decoding system for removing impairments from the encoded broadcast stream. The trusted device of the decoding system accesses packets carrying the instructions for removing the impairments and provides these instructions to the video decoder to properly decode the broadcast stream.

The present invention provides a dynamic method of protecting a broadcast stream from unauthorized access, where the impairment schemes can be dynamically selected in accordance with current conditions. Additionally, the present invention also provides an effective method of monitoring or metering the usage of the broadcast stream by a user.

### BRIEF DESCRIPTION OF THE DRAWINGS

The teachings of the present invention can be readily understood by considering the following detailed description in conjunction with the accompanying drawings, in which:
FIG. 1 illustrates a block diagram of a simplified packet stream system of the present invention;
FIG. 2 illustrates a block diagram of an MPEG-compliant encoder of the present invention;
FIG. 3 illustrates a flowchart of a top level method for inserting impairments into the encoded stream of the present invention;
FIG. 4 illustrates a flowchart of a method for inserting impairments into the frame type information of the encoded stream of the present invention;
FIG. 5 illustrates a flowchart of a method for inserting impairments into the motion information of the encoded stream of the present invention;
FIG. 6 illustrates a flowchart of a method for inserting impairments into the PID information of the encoded stream of the present invention; and
FIG. 7 illustrates an encoding system and a decoding system of the present invention.

To facilitate understanding, identical reference numerals have been used, where possible, to designate identical elements that are common to the figures.

### DETAILED DESCRIPTION

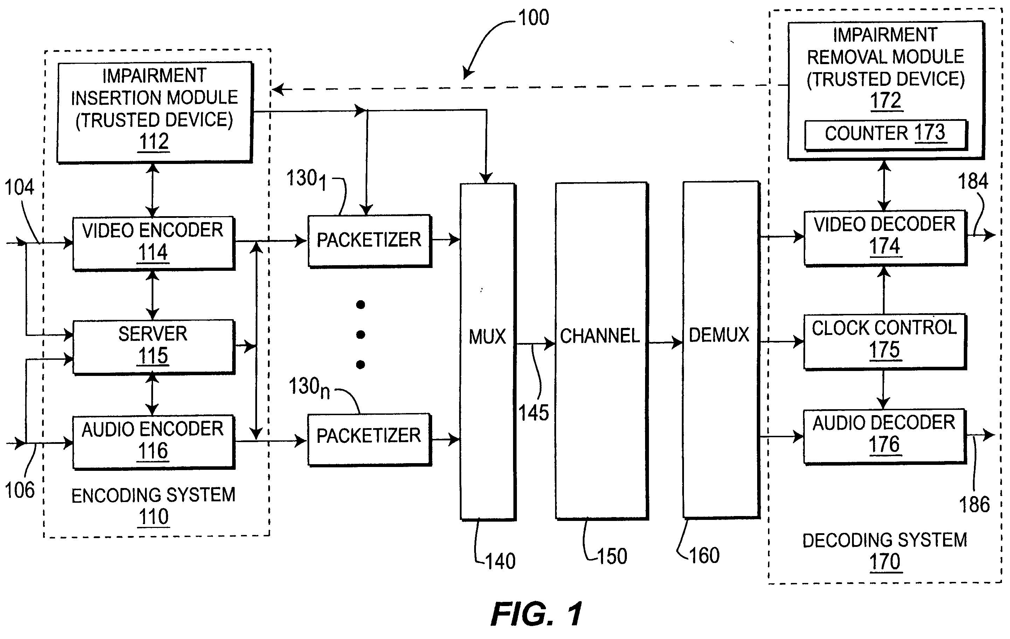

FIG. 1 depicts a block diagram of a simplified structure of a packet stream system 100 of the present invention. The packet stream system 100 is broadly illustrated as having an encoding system 110 (or broadly defined as a digital data transmitting system), a decoding system 170 (or broadly defined as a receiver system) and various packet formation and transmission modules that are further described below.

More specifically, a "transport stream" as defined in accordance with the MPEG standards is used in the packet stream system illustrated in FIG. 1. Although the present invention is described below using the MPEG transport stream as an example, those skilled in the art will realize that the present invention can be applied to any packet streams, i.e., a MPEG "program stream" or any other packet streams in accordance with other formats. Furthermore, although the present invention is described below using the term "stream", it should be understood that the various operations described below may be performed on the entire stream or portion thereof.

Encoding system 110 includes an impairment insertion module 112 (or trusted device), a video encoder 114, and an audio encoder 116. The video encoder 114 receives and encodes video data 104 into an elementary video bitstream. Similarly, the system also includes an audio encoder 116 for receiving and encoding audio data 106 into an elementary audio bitstream. The impairment insertion module 112 is designed to provide "impairments" and/or "impairment removal instructions" to the video encoder which will be further described below.

Those skilled in the art will realize that a plurality of video encoders 114 and audio encoders 116 can be employed to produce a plurality of elementary bitstreams. In fact, the plurality of video and audio encoders can be collectively represented by a server 115, which may employ various encoders and/or may simply contain a plurality (or a library) of stored elementary streams or original multimedia sources in various storage media. Generally, the output of such server contains interleaved program streams.

In turn, these bitstreams are sent to packetizers 130₁₋ₙ, where the elementary bitstreams are converted into packets. Information for using the packets independently of the transport stream may be added when the packets are formed. Thus, non-audio/video data are allowed, but they are not shown in FIG. 1.

The packets are received and multiplexed by the transport stream multiplexer 140 to produce a transport stream 145. Packets constructed from elementary streams that form a program (a group of "Packet Identifiers" (PIDs) with associated video and audio data) generally share a common time base. Thus, the transport stream may contain one or more programs with one or more independent time bases, where the time bases are used for synchronized presentation. The time bases of different programs within a transport stream may be different.

The transport stream 145 is transmitted over a transmission channel 150, which may further incorporate separate channel specific encoder and decoder (not shown). Next, the transport stream 145 is demultiplexed and decoded by a transport stream demultiplexor 160, where the elementary streams serve as inputs to the decoding system 170.

The decoding system 170 comprises an impairment removal module 172 (or a trusted device), a video decoder 174, a clock control 175 and an audio decoder 176. The video decoder 174 and audio decoder 176 will essentially perform the complementary or reverse functions of the video and audio encoders, to regenerate the original video signals 184 and audio signals 186 respectively. Since impairments have been intentionally introduced into the encoded stream, the impairment removal module 172 serves to extract the impairment removal instructions from the transmitted stream, thereby assisting the video decoder 174 to properly decode the encoded bitstream. Further description of the impairment removal methods will be described below.

Additionally, timing information is also extracted by the transport stream demultiplexor 160 and delivered to clock control 175 for synchronizing the video and audio decoders with each other and with the channel. Synchronization of the decoders with the channel is accomplished through the use of the "Program Clock Reference" (PCR) in the transport stream. The PCR is a time stamp encoding the timing of the bitstream itself and is used to derive the decoder timing.

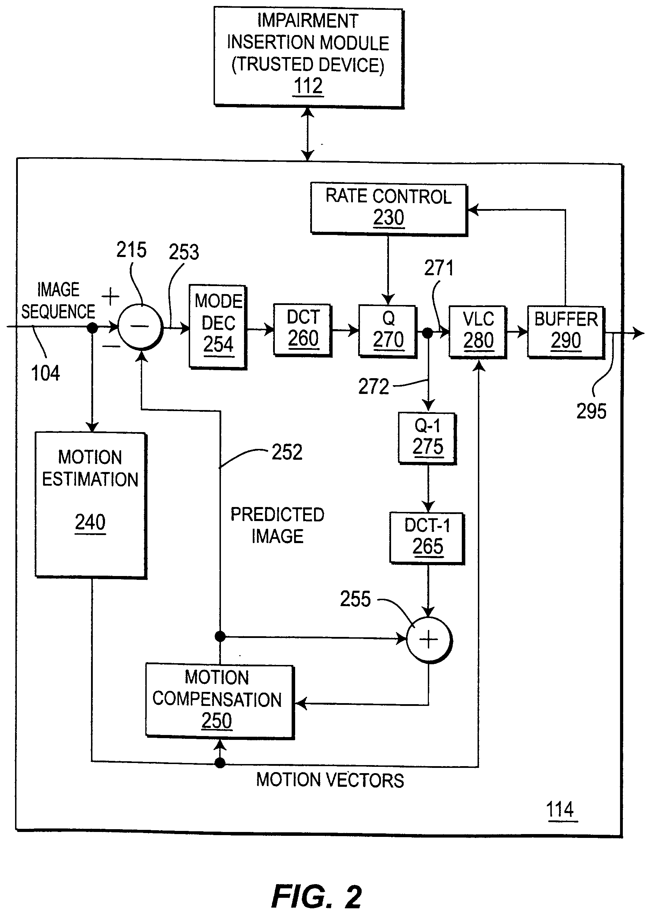

FIG. 2 illustrates a block diagram of an MPEG-compliant encoder of the present invention. More specifically, FIG. 2 illustrates the impairment insertion module 112 in operation with the various modules within an MPEG-compliant encoder. A brief description is provided to discuss the various coding operations that are performed within the video encoder and then followed by a description of several methods of inserting impairments intentionally into the resulting encoded stream. Although an MPEG-compliant encoder is used to describe the present invention below, it should be understood that other types of encoder could be adapted to use the present invention.

In the preferred embodiment of the present invention, the apparatus 114 is an encoder or a portion of a more complex block-based motion compensated coding system. The apparatus 114 comprises a motion estimation module 240, a motion compensation module 250, a mode decision module 254, a rate control module 230, a transform module, (e.g., a DCT or wavelet module) 260, a quantization module 270, a coder, (e.g., a variable length coding module) 280, a buffer 290, an inverse quantization module 275, an inverse transform module (e.g., inverse DCT or wavelet module) 265, a subtractor 215 and a summer 255. Although the video encoder 114 comprises a plurality of modules, those skilled in the art will realize that the functions performed by the various modules are not required to be isolated into separate modules as shown in FIG. 2. For example, the set of modules comprising the motion compensation module 250, inverse quantization module 275 and inverse DCT module 265 is generally known as an "embedded decoder".

FIG. 2 illustrates an input video image (image sequence) on path 104 which is digitized and represented as a luminance and two color difference signals (Y, Cᵣ, C_{b}) in accordance with the MPEG standards. These signals are further divided into a plurality of layers such that each picture (frame) is represented by a plurality of macroblocks. Each macroblock comprises four (4) luminance blocks, one Cᵣ block and one C_{b} block where a block is defined as an eight (8) by eight (8) sample array. The division of a picture into block units improves the ability to discern changes between two successive pictures and improves image compression through the elimination of low amplitude transformed coefficients (discussed below). The digitized signal may optionally undergo preprocessing such as format conversion for selecting an appropriate window, resolution and input format.

The input video image on path 104 is received into motion estimation module 240 for estimating motion vectors. A motion vector is a two-dimensional vector which is used by motion compensation to provide an offset from the coordinate position of a block in the current picture to the coordinates in a reference frame. The use of motion vectors greatly enhances image compression by reducing the amount of information that is transmitted on a channel because only the changes within the current frame are coded and transmitted.

The motion vectors from the motion estimation module 240 are received by the motion compensation module 250 for improving the efficiency of the prediction of sample values. Motion compensation involves a prediction that uses motion vectors to provide offsets into the past and/or future reference frames containing previously decoded sample values, and is used to form the prediction error. Namely, the motion compensation module 250 uses the previously decoded frame and the motion vectors to construct an estimate of the current frame.

Furthermore, prior to performing motion compensated prediction for a given macroblock, a coding mode must be selected. As discussed above, a plurality of coding modes is available and the proper selection of a coding mode for each macroblock will produce optimal coding performance. In the preferred embodiment of the present invention, a prediction for each coding mode is performed by the motion compensation module 250. Thus, depending on the coding mode, the motion compensation module forms a motion compensated prediction (predicted image) on path 252 of the contents of the block based on past and/or future reference pictures. This motion compensated prediction on path 252 is subtracted via subtractor 215 from the input video image on path 104 in the current macroblocks to form an error signal (e) or predictive residual on path 253. The predictive residuals of all the coding modes for each macroblock are forwarded to the mode decision module 254 for evaluation.

The mode decision module 254 uses the predictive residuals for determining the selection of a coding mode for each macroblock. Having selected a coding mode for a macroblock, the mode decision module 254 passes the corresponding predictive residual signal from the selected coding mode to a transform module, e.g., a DCT or wavelet module 260. The DCT module then applies a forward discrete cosine transform process to each block of the predictive residual signal to produce a set of eight (8) by eight (8) block of DCT coefficients. The discrete cosine transform is an invertible, discrete orthogonal transformation where the DCT coefficients represent the amplitudes of a set of cosine basis functions.

The resulting 8 x 8 block of DCT coefficients is received by quantization module 270, where the DCT coefficients are quantized. The process of quantization reduces the accuracy with which the DCT coefficients are represented by dividing the DCT coefficients by a set of quantization values with appropriate rounding to form integer values. The quantization values can be set individually for each DCT coefficient, using criteria based on the visibility of the basis functions (known as visually weighted quantization). By quantizing the DCT coefficients with this value, many of the DCT coefficients are converted to zeros, thereby improving image compression efficiency. The process of quantization is a key operation and is an important tool to achieve visual quality and to control the encoder to match its output to a given bit rate (rate control).

Next, the resulting 8 x 8 block of quantized DCT coefficients is received by a coder, e.g., variable length coding module 280 via signal connection 271, where the two-dimensional block of quantized coefficients is scanned in a "zig-zag" order to convert it into a one-dimensional string of quantized DCT coefficients. Variable length coding (VLC) module 280 then encodes the string of quantized DCT coefficients and all side-information for the macroblock such as macroblock type and motion vectors. Thus, the VLC module 280 performs the final step of converting the input image into a valid data stream.

The data stream is received into a buffer, e.g., a "First In-First Out" (FIFO) buffer 290. A consequence of using different picture types and variable length coding is that the overall bit rate is variable. Namely, the number of bits used to code each frame can be different. Thus, in applications that involve a fixed-rate channel, a FIFO buffer is used to match the encoder output to the channel for smoothing the bit rate. Thus, the output signal on path 295 from FIFO buffer 290 is a compressed representation of the input video image 104, where it is sent to a storage medium or a telecommunication channel.

The rate control module 230 serves to monitor and adjust the bit rate of the data stream entering the FIFO buffer 290 to prevent overflow and underflow on the decoder side (within a receiver or target storage device, not shown) after transmission of the data stream. A fixed-rate channel is assumed to carry bits at a constant rate to an input buffer within the decoder (not shown). At regular intervals determined by the picture rate, the decoder instantaneously removes all the bits for the next picture from its input buffer. If there are too few bits in the input buffer, i.e., all the bits for the next picture have not been received, then the input buffer underflows resulting in an error. Similarly, if there are too many bits in the input buffer, i.e., the capacity of the input buffer is exceeded between picture starts, then the input buffer overflows resulting in an overflow error. Thus, it is the task of the rate control module 230 to monitor the status of buffer 290 to control the number of bits generated by the encoder, thereby preventing the overflow and underflow conditions.

Furthermore, the resulting 8 x 8 block of quantized DCT coefficients from the quantization module 270 is received by the inverse quantization module 275 and inverse DCT module 265 via signal connection 272. In brief, at this stage, the encoder regenerates I-frames and P-frames of the input video image by decoding the data so that they are used as reference frames for subsequent encoding.

Namely, the present invention employs a compliant MPEG encoder and a compliant MPEG decoder with both having a trusted device to effect coordinated insertion and removal of impairments to protect access of the broadcast stream. The basic method involves addition of impairments in the encoder which are included in the transmitted MPEG stream, along with inclusion of "impairment decoding" instructions in data packets sent to the trusted device, and control of the MPEG decoder by the trusted device which acts as a controller for the decoding functions. A representative architecture for this system is shown in Figure 1 above.

This architecture provides several advantages. For example, it is extensible, e.g., it can support intermediate storage at the receiver system prior to decoding of the stream, and that the trusted device does not need to provide control on a packet-by-packet basis to the MPEG decoder, but only provides control at a frequency dictated by variations in the impairments used. Architecture extensibility in this context means that any number of different impairment types may be incorporated into the broadcast stream at any given time, thereby addressing the problem of having an unauthorized receiver that has obtained a static encryption key. Namely, the impairments can be constantly modified in the present invention. Because the impairments are integrated into the compressed MPEG stream, a received but as yet undecoded stream may be stored for later retrieval without impacting the security of the protected video. This approach will hold true as long as both the embedded impairments and the embedded instructions for removing the impairments are also stored, which can be implemented simply by storing the entire received encoded stream.

Additionally, the ability to vary the impairment schemes addresses another criticality. From a system perspective, there is a tradeoff between the consumption of precious bandwidth used to transmit impairments versus the amount of protection that is needed for the data stream. This tradeoff is an implementation decision that may be affected or changed throughout the day, i.e., in accordance to real-time conditions. Thus, the present invention provides various impairment embodiments below that can be employed by a transmitting system as the conditions allow, e.g., switching from a more complex impairment scheme to a less complex impairment scheme when it is necessary to conserve bandwidth or vice versa.

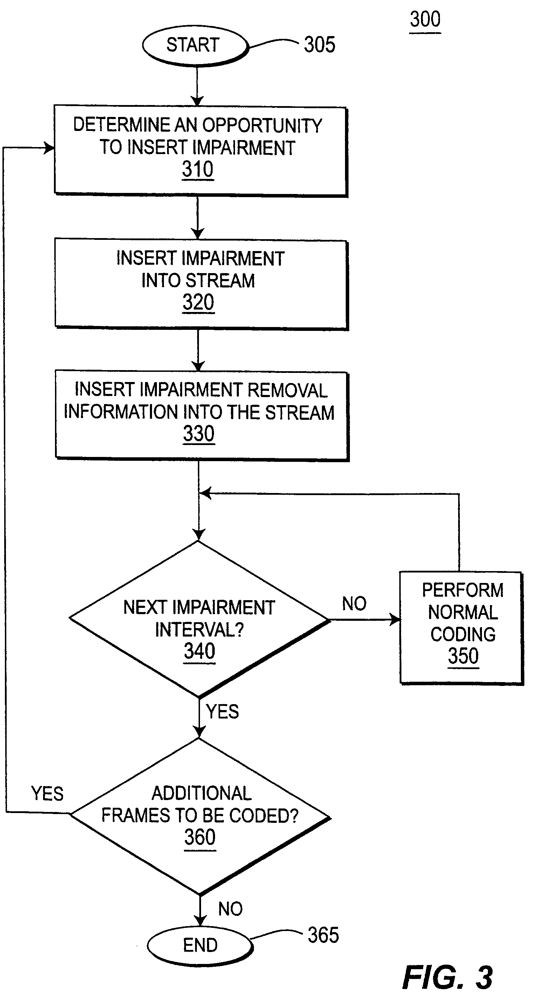

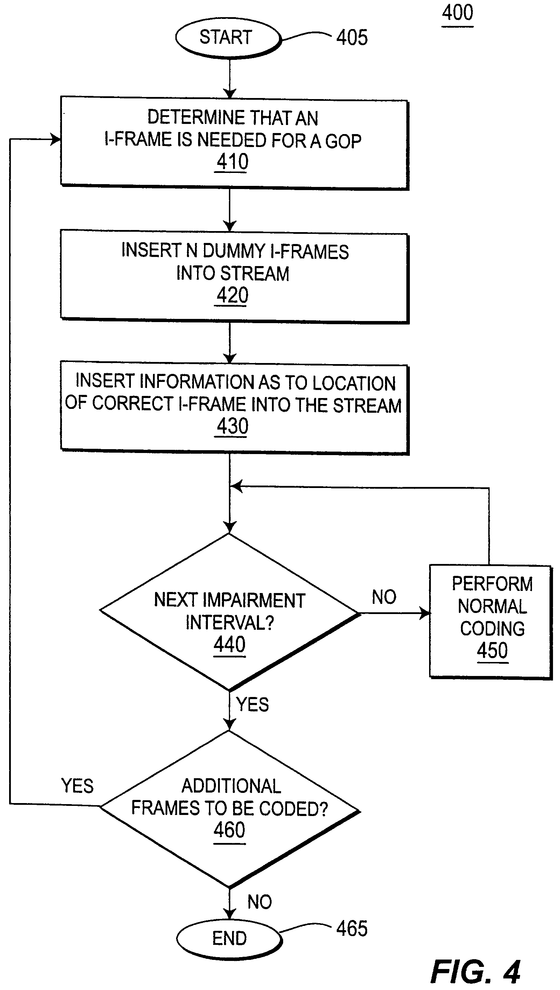

FIG. 3 illustrates a flowchart of a top level method 300 for inserting impairments into the encoded stream of the present invention. Method 300 starts in step 305 and proceeds to step 310, where method 300 must determine a proper opportunity to insert impairments into the encoded stream. Since the impairments are physically inserted into the actual data stream, i.e., the actual data themselves are changed, method 300 must carefully insert the impairments in a such a manner that the encoded stream is still in compliant with the relevant standards. Namely, impairing the stream to such an extent that it is no longer a recognizable standard compliant stream may not be practical. Such opportunities, include but are not limited to, impairing the "frame type" information, motion information and PID information of the encoded stream. Examples of such impairments are described below with reference to FIGs. 4-6.

In step 320, once the type of impairment opportunity has been decided and determined, method 300 proceeds to insert the impairments into the stream. Namely, the impairments actually form a part of the data stream, since the impairments physically change the data themselves. An unauthorized receiver will perceive the encoded stream as a compliant stream, but will be unable to decode the video information properly. Specifically, the unauthorized receiver will still be able to decode the video, but the resulting video will be severely degraded.

In step 330, method 300 will also insert the impairment removal information into the stream. In one embodiment, packets carrying impairment removal information are assigned a unique PID that is known to the trusted device 172 of the receiver system. This allows the trusted device 172 to use the information stored in these uniquely identified packets to gain insight into the currently selected type of impairment and the instructions to remove the impairments.

In step 340, method 300 queries whether the next impairment interval has arrived, If the query is negatively answered, then method 300 proceeds to step 350, where normal coding continues under the present impairment scheme. If the query is positively answered, then method 300 proceeds to step 360.

In step 360, method 300 queries whether additional frames are to be encoded. If the query is negatively answered, then method 300 ends in step 365. If the query is positively answered, then method 300 returns to step 310, where method 300 determines another proper opportunity to insert impairments into the encoded stream. In other words, once an impairment scheme is selected, it can be continued for a time interval selected by the transmitting system. For example, the impairment scheme may be changed every group of pictures (GOP), every scene change, every minute, every 15 minutes, every hour, every program, everyday, every week and so on. The decision to change impairment scheme may be affected by the available transmission bandwidth, the effectiveness or suitability of a particular impairment type for the video being broadcast, the value of the video being protected (e.g., a highly sought after live sporting event versus a classic old movie), and so on. Thus, the present invention not only provides an effective protection mechanism for the broadcast stream, but it also provides a highly flexible and adaptable mechanism to address changing conditions.

FIG. 4 illustrates a flowchart of a method 400 for inserting impairments into the frame type information of the encoded stream of the present invention. Specifically, in this embodiment, method 400 is designed to implement "I-Frame repeat". An I-Frame is a basic reference frame for MPEG video, where the I-frame provides information that acts as a baseline for the encoder and decoder over an extended range of frames (GOP) or received packets. Since many of the decoding decisions over this range are performed relative to the I-Frame, the proper decoding of this important I-frame is essential for the proper decoding of other frames that rely on this reference frame.

In brief, an "I-Frame repeat" impairment is produced by inserting "N" dummy I-frames with incorrect data in the MPEG stream along with the single correct I-Frame for a particular GOP. The trusted device 112 in the encoder generates both the number of repeats used and the ordinal of the correct I-Frame. This information is inserted into a packet that is used by the trusted receiver device 172, which then provides the control information to the decoder regarding which I-Frame to use, and how many to discard.

Returning to FIG. 4, method 400 starts in step 405 and proceeds to step 410, where method 400 must determine or detect when an I-frame is needed for a next GOP, as performed by the mode decision module 254 of FIG. 2. Once this opportunity is detected and the proper I-frame is generated, method 400 proceeds to step 420.

In step 420, method 400 generates "N" number of dummy I-frames with incorrect data. The proper I-frame is dispersed among the "N" number of dummy I-frames and the entire set of I-frames are then encoded into the encoded stream.

In step 430, method 400 also inserts the instruction to remove the impairments into the encoded stream. As discussed above, the impairment removal instruction will reside in a packet having a unique PID that will alert and notify the trusted device 172 as to how to remove the inserted impairments.

In step 440, method 400 queries whether the next impairment interval has arrived. If the query is negatively answered, then method 400 proceeds to step 450, where normal coding continues under the present impairment scheme (e.g., for every GOP or every "m" GOP, generate two (2) dummy I-frames and insert the proper I-frame between the two dummy I-frames). If the query is positively answered, then method 400 proceeds to step 460.

In step 460, method 400 queries whether additional frames are to be encoded. If the query is negatively answered, then method 400 ends in step 465. If the query is positively answered, then method 400 returns to step 410, where method 400 determines or detects when the next I-frame is needed for a next GOP.

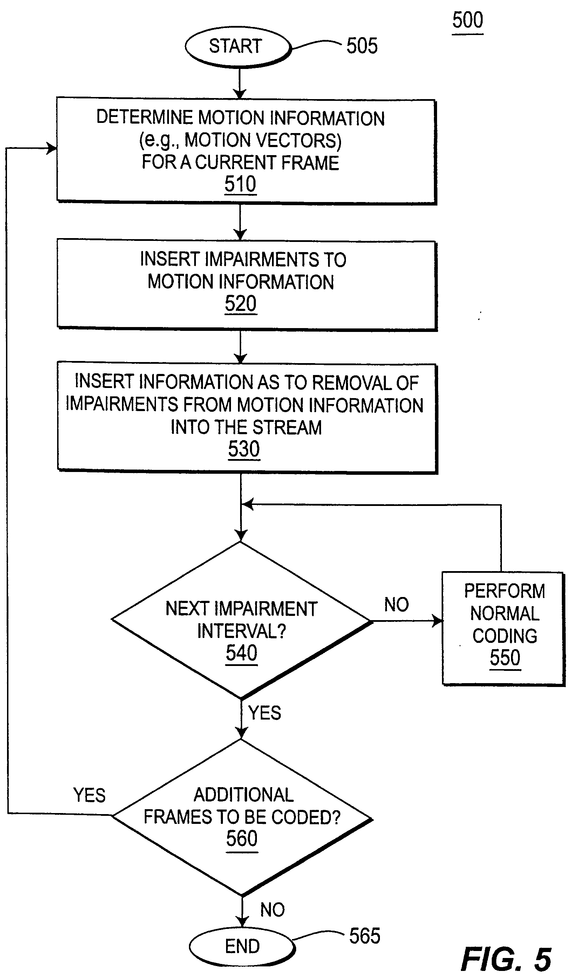

FIG. 5 illustrates a flowchart of a method 500 for inserting impairments into the motion information of the encoded stream of the present invention. Specifically, in this embodiment, method 500 is designed to implement "motion vector estimation error insertion". The motion vectors are employed efficiently to convey any motion information between frame to frame, thereby significantly reducing the bandwidth required to communicate object or block motion. An impairment of this data would include inserting known errors generated by the trusted device 112 (e.g., inserting a magnitude and/or direction change) in the motion vector estimations generated by the video encoder 114, and sending the known errors to the trusted decoder device 172. The trusted decoder device could then provide a lookup table of motion vector correction factors for use by the video decoder 174.

Returning to FIG. 5, method 500 starts in step 505 and proceeds to step 510, where method 500 must determine or detect when motion information, e.g., motion vectors, are generated for a current frame as performed by the motion estimation module 240 of FIG. 2. Once this opportunity is detected and the proper motion information is generated, method 500 proceeds to step 520.

In step 520, method 500 generates a known motion error into the proper motion information (e.g., adding an additional magnitude to all motion vectors, or to every other "M" motion vectors, and/or adding an additional phase shift to all motion vectors, or to every other "X" motion vectors). In fact, the known error can be inserted on a frame basis, e.g., into every other frame, every B-frame, every P-frame, only the B-frame immediately following a P-frame and so on.

In step 530, method 500 also inserts the instruction to remove the impairments from the motion information into the encoded stream. As discussed above, the impairment removal instruction will reside in a packet having a unique PID that will alert and notify the trusted device 172 as to how to remove the inserted impairments.

In step 540, method 500 queries whether the next impairment interval has arrived. If the query is negatively answered, then method 500 proceeds to step 550, where normal coding continues under the present impairment scheme (e.g., inserting known motion errors for every B-frame). If the query is positively answered, then method 500 proceeds to step 560.

In step 560, method 500 queries whether additional frames are to be encoded. If the query is negatively answered, then method 500 ends in step 565. If the query is positively answered, then method 500 returns to step 510, where method 500 determines or detects when motion information, e.g., motion vectors, are generated for a current frame.

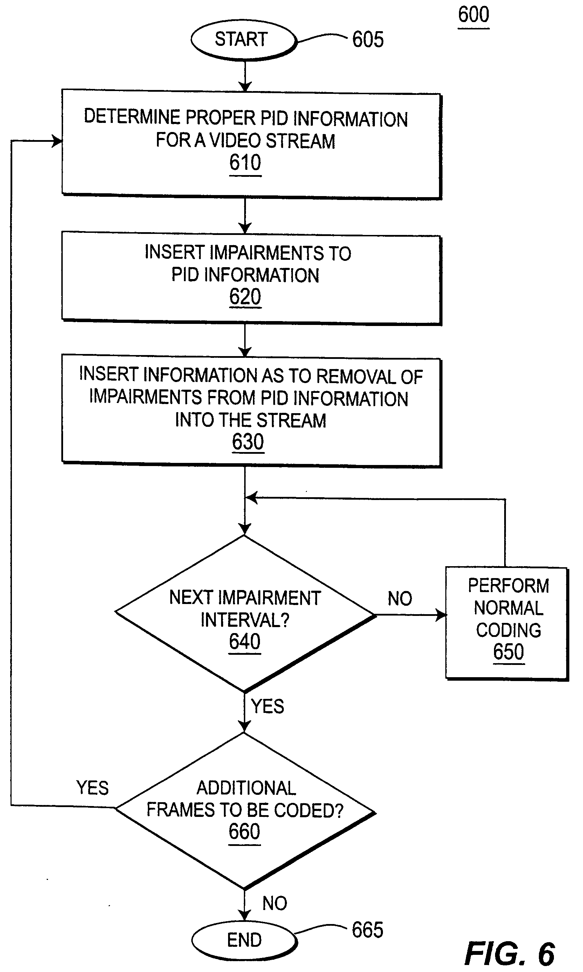

FIG. 6 illustrates a flowchart of a method 600 for inserting impairments into the PID information of the encoded stream of the present invention. Specifically, in this embodiment, method 600 is designed to implement "dummy packet identifiers (PIDs)". For this approach, the encoder would vary the PID of the single video stream according to a sequence of PIDs generated by the trusted encoder device 112. This sequence would then be used by the trusted decoder device 172 to permit the video decoder to track the correct PIDs for the video stream.

Returning to FIG. 6, method 600 starts in step 605 and proceeds to step 610, where method 600 must determine or detect the proper PID for a particular video stream e.g., as performed by the packetizer 130₁ or transport stream multiplexer 140. Once this opportunity is detected and the proper PID information is generated, method 600 proceeds to step 620.

In step 620, method 600 generates a mapping guide of one or more PIDs that are to be used to represent the proper PID for the particular video stream (e.g., using three (3) PID values to represent the same video stream). In fact, the set of PID values can be changed over time.

In step 630, method 600 also inserts the instruction to remove the impairments from the PID information into the encoded stream, e.g., the following PID values "x", "y", "z" are all representative of a single video stream having the PID "y"). As discussed above, the impairment removal instruction will reside in a packet having a unique PID that will alert and notify the trusted device 172 as to how to remove the inserted impairments.

In step 640, method 600 queries whether the next impairment interval has arrived. If the query is negatively answered, then method 600 proceeds to step 650, where normal coding continues under the present impairment scheme. If the query is positively answered, then method 600 proceeds to step 660.

In step 660, method 600 queries whether additional frames are to be encoded. If the query is negatively answered, then method 600 ends in step 665. If the query is positively answered, then method 600 returns to step 610, where method 600 determines or detects the proper PID for a particular video stream.

It should be noted that the various impairment embodiments disclosed above would provide an additional advantage. Specifically, since the present invention is capable of changing the impairment schemes, it is therefore possible to track how often impairment removal instructions were used to decode the broadcast stream. Namely, it is possible by using the decoder trusted device 172 and a counter 173, to measure and quantify how often the packets carrying the impairment removal instructions were used to decode the broadcast video by the decoding system 170. For example, if the impairment scheme is changed every 15 minutes and the decoder trusted device 172 accessed four (4) packets carrying the impairment removal instructions to decode the broadcast video, then it is possible to deduce that the viewer watched a program for a period of one hour. This information can be exploited for metering the usage of the broadcast stream by a user, thereby allowing a transmitting entity to charge the user based upon actual viewing of the broadcast video.

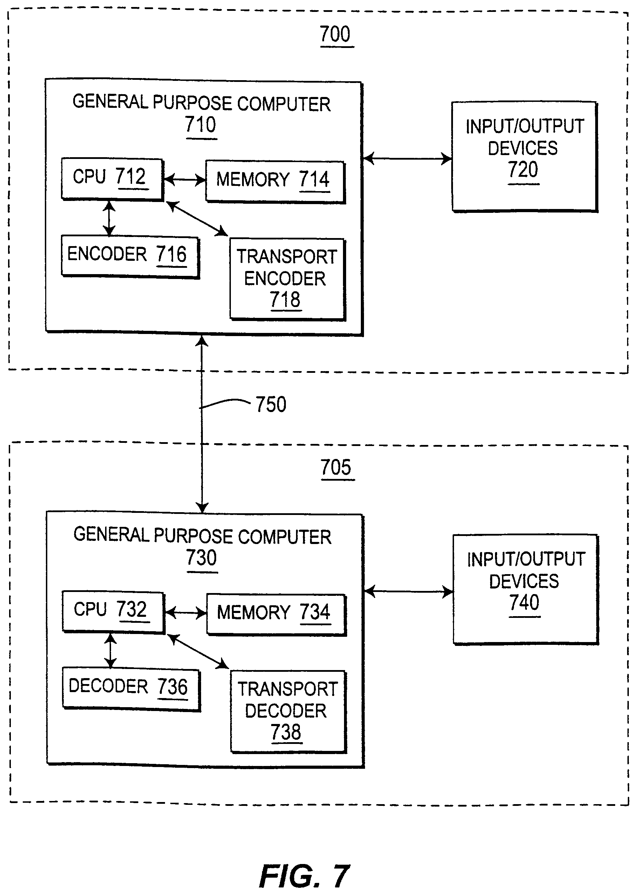

FIG. 7 illustrates an encoding system 700 and a decoding system 705 of the present invention. The encoding system 700 comprises a general purpose computer 710 and various input/output devices 720. The general purpose computer comprises a central processing unit (CPU) 712, a memory 1714, an encoder 716 for receiving and encoding a sequence of images and a trusted device 718.

In the preferred embodiment, the encoder 716 and trusted device 718 are simply the video encoder 114 and trusted device 112, respectively, as discussed above. The encoder 716 and trusted device 718 can be physical devices which are coupled to the CPU 712 through communication channels. Alternatively, the encoder 716 and trusted device 718 can be represented by a software application (or a combination of software and hardware, e.g., application specific integrated circuit (ASIC))which is loaded from a storage device, e.g., a magnetic or optical disk, and resides in the memory 714 of the computer. As such, the encoder 716 and trusted device 718 of the present invention can be stored on a computer readable medium, including the bitstreams generated by these encoders.

The computer 710 can be coupled to a plurality of input and output devices 720, such as a keyboard, a mouse, a camera, a camcorder, a video monitor, any number of imaging devices or storage devices, including but not limited to, a tape drive, a floppy drive, a hard disk drive or a compact disk drive. The input devices serve to provide inputs to the computer for producing the encoded video bitstreams or to receive the sequence of video images from a storage device or an imaging device.

The encoding system is coupled to the decoding system via a communication channel 750. The present invention is not limited to any particular type of communication channel.

The decoding system 705 comprises a general purpose computer 730 and various input/output devices 740. The general purpose computer comprises a central processing unit (CPU) 732, a memory 734, an decoder 736 for receiving and decoding a sequence of encoded images and a trusted device 738.

In the preferred embodiment, the decoder 736 and trusted device 738 are simply the video decoder 174 and trusted device 172, respectively, as discussed above. The decoder 736 and trusted device 738 can be physical devices which are coupled to the CPU 732 through communication channels. Alternatively, the decoder 736 and trusted device 738 can be represented by a software application which is loaded from a storage device, e.g., a magnetic or optical disk, and resides in the memory 734 of the computer. As such, any complementary decoder of the encoder 114 and the trusted device 738 of the present invention can be stored on a computer readable medium.

The computer 730 can be coupled to a plurality of input and output devices 740, such as a keyboard, a mouse, a video monitor, or any number of devices for storing or distributing images, including but not limited to, a tape drive, a floppy drive, a hard disk drive or a compact disk drive. The input devices serve to allow the computer for storing and distributing the sequence of decoded video images.

It should be noted that although the decoder 174 is not specifically described, those skilled in the art will realize that decoder 174 can be any decoder that is complementary to the encoder 114 as discussed above for decoding the bitstreams generated by the encoder 114. Similarly, although complementary decoding methods are not described above in a step by step format as in the case of FIGs. 3-6, those skilled in the art will realize that such complementary decoding methods can be practiced in light of the present description of the encoding methods.

Although various embodiments which incorporate the teachings of the present invention have been shown and described in detail herein, those skilled in the art can readily devise many other varied embodiments that still incorporate these teachings.

## Claims

1. A method for controlling access to a broadcast stream, where said broadcast stream carries an input image sequence signal, said method comprising the steps of:
(a) encoding the input image sequence signal into the broadcast stream; and
(b inserting an impairment into the broadcast stream.

2. The method of claim 1, wherein said inserting step (b) inserts said impairment that comprises frame type impairment.

3. The method of claim 1, wherein said inserting step (b) inserts said impairment that comprises motion information impairment.

4. The method of claim 1, wherein said inserting step (b) inserts said impairment that comprises packet identifier information impairment.

5. The method of claim 1, wherein said inserting step (b) inserts impairment that varies in accordance to changing conditions.

6. An apparatus for controlling access to a broadcast stream, where said broadcast stream carries an input image sequence signal, said apparatus comprising:
an encoder for encoding the input image sequence signal into the broadcast stream; and
an impairment insertion module, coupled to said encoder, for inserting an impairment into the broadcast stream.

7. A computer-readable medium having stored thereon a plurality of instructions, the plurality of instructions including instructions which, when executed by a processor, cause the processor to perform the steps comprising of:
(a) encoding the input image sequence signal into the broadcast stream; and
(b inserting an impairment into the broadcast stream.

8. An apparatus for decoding an impaired encoded broadcast stream, where said broadcast stream carries an input image sequence signal, said apparatus comprising:
an impairment removal module for obtaining an impairment removal instruction from the encoded broadcast stream; and
a decoder, coupled to said impairment removal module, for decoding said encoded broadcast stream in accordance with said impairment removal instruction.

9. A method for decoding an impaired encoded broadcast stream, where said broadcast stream carries an input image sequence signal, said method comprising the steps of:
(a) obtaining an impairment removal instruction from the encoded broadcast stream; and
(b) decoding said encoded broadcast stream in accordance with said impairment removal instruction.

10. A computer-readable medium having stored thereon a plurality of instructions, the plurality of instructions including instructions which, when executed by a processor, cause the processor to perform the steps comprising of:
(a) obtaining an impairment removal instruction from the encoded broadcast stream; and
(b) decoding said encoded broadcast stream in accordance with said impairment removal instruction.
